# FASCICULE DE BREVET EUROPEEN

(11) **EP 0 495 324 B1**
(45) Date de publication et mention de la délivrance du brevet: **16.02.1994**
(21) Numéro de dépôt: 91403127.3
(22) Date de dépôt: 20.11.1991
(51) Int. Cl.: B60T 8/48

(54) **Système d'antipatinage pour véhicule automobile**
Antirutschsystem für Kraftfahrzeuge
Anti-slip system for motor vehicles

(30) Priorité: 20.12.1990 FR 9016025
(43) Date de publication de la demande: 22.07.1992
(73) Titulaire: ALLIEDSIGNAL EUROPE SERVICES TECHNIQUES, 93700 Drancy (FR)
(72) Inventeur: Lebret, Pierre, BENDIX EUROPE, F-93700 Drancy (FR)
(74) Mandataire: Bentz, Jean-Paul

(56) Documents cités:
- EP-A- 0 156 323
- EP-A- 0 182 374
- EP-A- 0 319 719
- EP-A- 0 376 788
- DE-A- 3 939 177
- FR-A- 2 590 217
- FR-A- 2 636 575
- GB-A- 2 218 479

## Description

La présente invention concerne un système d'anti-patinage des roues motrices et de freinage, pour véhicule automobile, dont le système de freinage comporte deux sous-circuits hydrauliques reliant chacun le moteur de frein d'une roue motrice et le moteur de frein d'une roue libre à une chambre de travail d'un maître-cylindre relié à un réservoir général de fluide sous basse pression et inclut un dispositif d'anti-blocage des roues au freinage.

Plus précisément, l'invention concerne un système défini par le préambule de la revendication principale et connu dans l'art antérieur par le document EP-A-O 376 788.

Bien que ce document décrive un système de freinage à anti-blocage et anti-patinage dont chaque sous-circuit ne comporte que trois électrovalves, la présente invention vise à réduire encore le nombre d'électrovalves nécessaires dans le but de proposer un système d'anti-patinage encore plus simple, encore plus fiable et moindre coût.

L'invention s'applique donc essentiellement à un circuit de freinage incluant un dispositif d'anti-blocage comportant, pour chacune des roues, une électrovalve à trois voies ouvrant normalement une communication entre une entrée de fluide sous pression et le moteur de frein associé à la roue, tandis qu'en phase détente du dispositif d'anti-blocage elle ferme cette communication et relie le moteur de frein à un réservoir de fluide sous basse pression spécifique à chaque sous-circuit, et pour chaque sous-circuit au moins un tiroir de commutation isolant les moteurs de frein de la chambre de travail du maître-cylindre lors du fonctionnement de la pompe dudit sous-circuit associée au dispositif d'anti-blocage, ladite pompe aspirant, en anti-blocage, le fluide dudit réservoir spécifique.

Selon l'invention, le système comprend en outre, pour chaque sous-circuit, une valve différentielle constituée par un tiroir de commande montée en parallèle par rapport à l'électrovalve associée au moteur de frein de la roue libre de ce sous-circuit, cette valve différentielle déterminant au repos une communication directe entre le moteur de frein de cette roue libre et la chambre de travail dudit maître-cylindre et interrompant cette communication lorsque la pression du fluide dans le moteur de frein de ladite roue libre est supérieure à une valeur déterminée.

Selon un aspect de l'invention, la valve différentielle détermine en plus une communication entre la sortie de refoulement de la pompe et la chambre de travail lorsque la pression du fluide dans le moteur de frein de la roue libre est supérieure à une valeur déterminée.

Le nombre total d'électrovalves dans chaque sous-circuit peut ainsi ne pas dépasser deux.

La présente invention sera mieux comprise et d'autres buts, avantages et caractéristiques de celle-ci apparaîtront plus clairement à la lecture de la description qui suit d'un mode de réalisation donné à titre non limitatif et à laquelle est jointe deux planches de dessin sur lesquelles :
- La Figure 1 représente schématiquement un système de freinage incluant l'invention,
- Les Figures 2 et 3 représentent schématiquement et partiellement deux modes de réalisation préférés de sous-circuits hydrauliques.

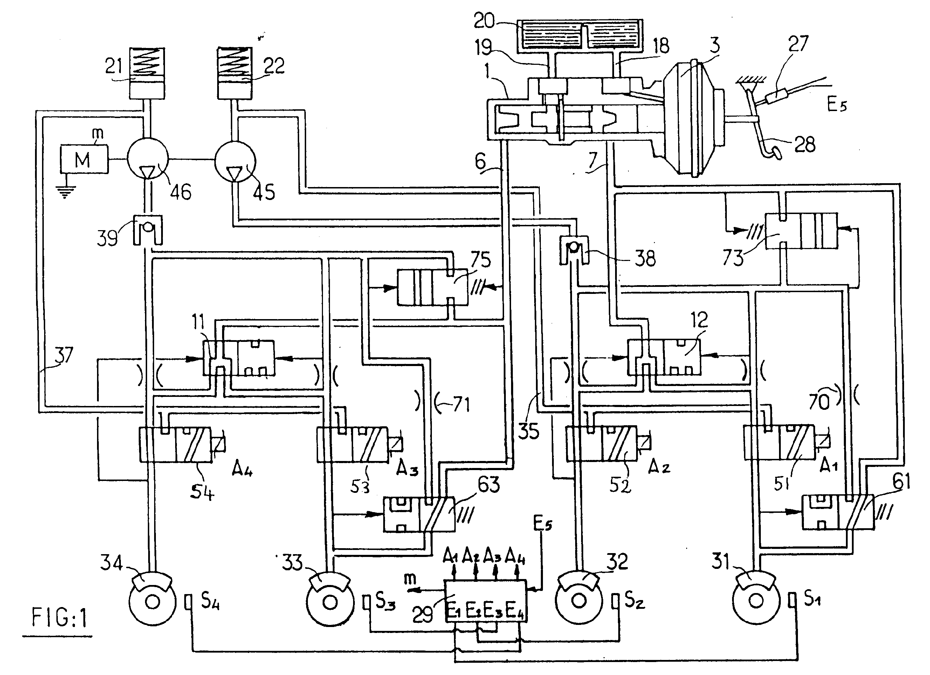

En référence maintenant à la Figure 1, le circuit de freinage comporte, de façon classique, un servofrein pneumatique 3 actionné par une pédale 28 munie d'un détecteur électrique 27 de son actionnement, relié par le fil E5 à l'unité centrale électronique de commande 29. Le servofrein 3 actionne un maître-cylindre tandem 1 schématiquement représenté, dont les deux chambres sont alimentées en liquide sous basse pression par un réservoir 20 par l'intermédiaire respectivement des conduits 18 et 19. Les conduits 6 et 7 de sortie respectivement des deux chambres du maître-cylindre 1 déterminent les deux sous-circuits hydrauliques dits respectivement secondaire et primaire.

Le conduit 6 - respectivement 7 - est relié au repos aux moteurs de frein 34, 33 - respectivement 32, 31 - d'une roue motrice 34, 32 et d'une roue libre 33, 31, par l'intermédiaire d'un tiroir hydraulique 11 - respectivement 12 - et de deux électrovalves à trois voies et deux positions 54, 53 - respectivement 52, 51 -. Lorsqu'elles sont excitées, les électrovalves 54, 53 - respectivement 52, 51 - interrompent la liaison précitée et mettent en communication le moteur de frein associé 34, 33 - respectivement 32, 31 - avec un réservoir spécifique de contenance réduite, spécifiquement une capacité 21 - respectivement 22 - par l'intermédiaire d'un conduit 37 - respectivement 35 -.

Cette excitation est commandée par l'unité centrale 29 lors d'une détection d'un risque de blocage par les capteurs correspondants S4 S3, respectivement S2 S1 associés chacun à une roue.

Lors d'unes telle détection, l'unité centrale 29 assure la mise en route du moteur M d'entraînement des pompes 46, 45 par le conducteur électrique m. Ces pompes aspirent le liquide détendu dans la capacité 21, 22 pour délivrer un liquide sous pression, par l'intermédiaire d'un clapet anti-retour 39, 38 aux moteurs de frein concernés 34, 33, 32, 31 dès que l'électrovalve associée 54, 53, 52, 51 est revenue en position de repos.

Lorsque la pompe 46, 45 est mise en route, la chambre correspondante du maître-cylindre est isolée du sous-circuit hydraulique grâce à la valve différentielle 11, 12 constituée par un tiroir de commutation de part et d'autre duquel sont appliquées la pression régnant dans le moteur de frein de la roue motrice 34, 32 et la pression générée par la pompe 46, 45.

Une autre valve différentielle 63, 61 constituée par un tiroir de commande dont une face reçoit la pression régnant dans le moteur de frein 33, 31 de la roue libre et dont l'autre face est chargée par un ressort, met au repos en communication le moteur de frein 33, 31 et le conduit 6, 7 menant au maître-cylindre et au réservoir. Lorsqu'une pression hydraulique supérieure à l'action de la force engendrée par le ressort se crée dans le moteur de frein 33, 31 de la roue libre, le tiroir de commande se déplace et interrompe cette communication.

Ce système fonctionne de la manière suivante. En simple freinage les valves sont dans la position représentée sauf les valves 63, 61 qui se ferment et le liquide sous pression est appliqué à tous les moteurs de freins. En cas de détection d'un blocage immédiat d'une roue, l'électrovalve associée est excitée, ainsi que la moteur de pompe.

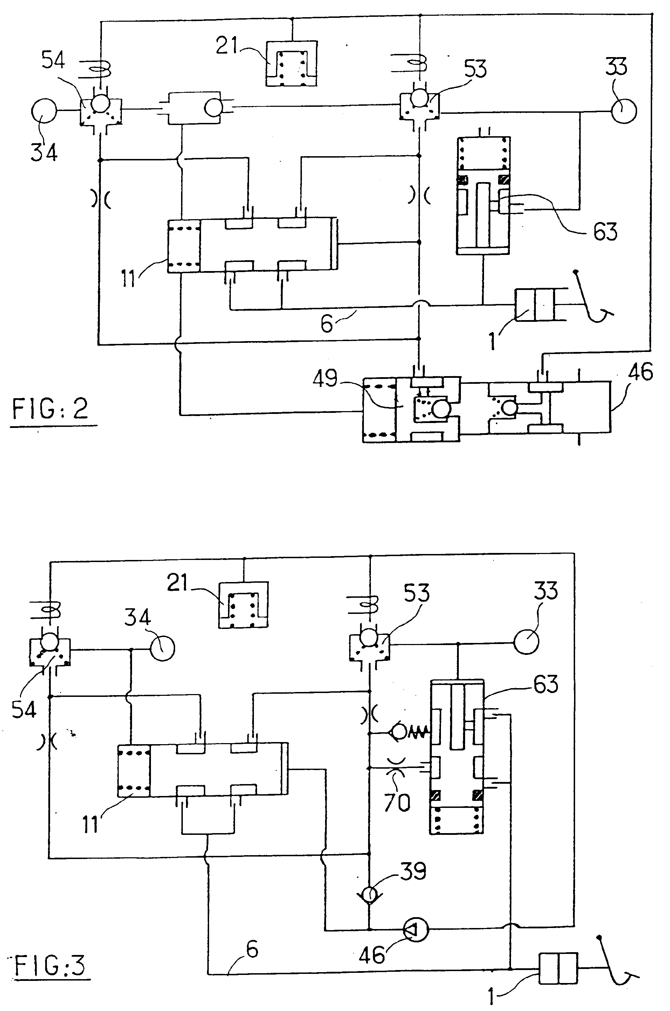

Le liquide dans le moteur de frein concerné va se détendre dans la capacité associée, d'où il est aussitôt aspiré par la pompe pour être, dans le cas d'une pompe classique (Fig. 3), renvoyé au maître-cylindre par l'intermédiaire d'une restriction 71, 70, ou stocké dans une chambre de sortie de la pompe (Fig. 2).

En cas de défaillance de la pompe, le maître-cylindre reste en communication avec le moteurs de frein, seul le liquide contenu dans la capacité concernée est perdu, et le véhicule peut encore être freiné au prix d'une course légèrement plus importante de la pédale de frein 28.

Lorsque les capteurs détectent un patinage d'une roue motrice, seule l'électrovalve de la roue libre associée est excitée, et la pompe correspondante est mise en route. A titre d'exemple, si la roue ayant le moteur de frein 34 patine, l'unité centrale le détecte facilement du fait de la différence de vitesses de rotation des roues associées au sous-circuit secondaire et du fait que le détecteur 27 n'a pas signalé la volonté du conducteur de freiner. L'électrovalve 53 est alors excitée et la pompe 46 mise en marche. Du fait de l'absence de pression dans le moteur de frein 33, la valve différentielle 63 reste au repos, et la pompe 46 aspire le liquide par l'intermédiaire du conduit 37, de l'électrovalve 53, de la valve différentielle 63, du conduit 6, de la chambre correspondante du maître-cylindre 1 et du conduit 19, au réservoir 20 de liquide sous basse pression. Le liquide sous pression issu de la pompe 46 isole le maître cylindre 1 du circuit d'alimentation du fluide sous haute pression grâce à la valve différentielle 11 et est appliqué au moteur de frein 34 de la roue motrice patinant.

Si pendant un cycle d'anti-patinage le conducteur désire freiner, le détecteur 27 recueille l'information et la transmet à l'unité centrale 29 qui arrête alors l'alimentation du moteur de la pompe 46 et désexcite l'électrovalve 53. La pression générée dans le maître-cylindre 1 agit sur la valve différentielle 63 pour interrompre la communication directe entre le conduit 6 et le moteur de frein 33.

L'adjonction d'une valve différentielle 75, 73 permet de limiter la pression de sortie de la pompe.

Sur les Figures 2 et 3 ont été représentés schématiquement deux modes de réalisation d'un sous-circuit. Les références utilisées sont les mêmes que celles utilisées en relation avec la Figure 1.

Figure 2, la valve proportionnelle 11 reçoit sur l'une des faces de son tiroir la pression la plus grande des pressions régnant dans les deux moteurs de frein 34, 33. Cette pression est également appliquée à un piston 49 portant le clapet de refoulement de la pompe 46 permettant d'inhiber la pompe 46 notamment en période de détente du cycle d'antiblocage et de limiter la pression qu'elle engendre. Le tiroir de la valve différentielle 63 est chargé au repos par un simple ressort prétaré, puisque l'alésage est ouvert à la pression atmosphérique. Figure 3, la pompe 46 est d'un type classique et la limitation de sa pression de sortie est assurée par la valve différentielle 63 qui comporte une deuxième voie, susceptible de retourner le liquide sous pression émis par la pompe vers le maître-cylindre par l'intermédiaire d'une restriction 70 lorsque la pression dans le moteur de frein 33 atteint une valeur déterminée par le tarage du ressort chargeant le tiroir de cette valve différentielle. En phase d'anti-patinage, l'électrovalve 53 sert de clapet de surpression.

On aura compris que de nombreux changement et modifications pourront être apportés par l'homme du métier à la présente invention sans sortir du cadre des revendications annexées.

## Revendications

1. Système d'anti-patinage des roues motrices et de freinage, pour véhicule automobile, dont le système de freinage comporte deux sous-circuits hydrauliques reliant chacun le moteur de frein d'une roue motrice et le moteur de frein d'une roue libre à une chambre de travail d'un maître-cylindre (1) relié à un réservoir général (20) de fluide sous basse pression et inclut un dispositif d'antiblocage des roues au freinage comportant, pour chacune des roues, une électrovalve à trois voies (54, 53, 52, 51) ouvrant normalement une communication entre une entrée de fluide sous pression et le moteur de frein (34, 33, 32, 31) associé à la roue, tandis qu'en phase détente du dispositif d'antiblocage elle ferme cette communication et relie le moteur de frein à un réservoir (21, 22) de fluide sous basse pression spécifique à chaque sous-circuit, et pour chaque sous-circuit au moins un tiroir de commutation (11, 12) isolant les moteurs de frein de la chambre de travail du maître-cylindre lors du fonctionnement de la pompe (46, 45) dudit sous-circuit associée au dispositif d'antiblocage, la dite pompe (46, 45) aspirant, en antiblocage, le fluide dudit réservoir spécifique, caractérisé en ce qu'il comprend en outre, pour chaque sous-circuit, une valve différentielle (63, 61) constituée par un tiroir de commande montée en parallèle par rapport à l'électrovalve (53, 51) associée au moteur de frein (33, 31) de la roue libre de ce sous-circuit, cette valve différentielle déterminant au repos une communication directe entre le moteur de frein (33, 31) de cette roue libre et la chambre de travail dudit maître-cylindre (1) et interrompant cette communication lorsque la pression du fluide dans le moteur de frein (33, 31) de ladite roue libre est supérieure à une valeur déterminée.

2. Système d'anti-patinage selon la revendication 1, caractérisé en ce que ladite valve différentielle détermine en plus une communication entre la sortie de refoulement de la pompe (46, 45) et ladite chambre de travail lorsque la pression du fluide dans le moteur de frein (33, 31) de ladite roue libre est supérieure à une valeur déterminée.

3. Système d'anti-patinage selon la revendication 2, caractérisé en ce que la communication entre la sortie de refoulement de la pompe (46, 45) et ladite chambre de travail est établie au travers d'une restriction (70, 71)

4. Système d'anti-patinage selon l'une quelconque des revendications précédentes, caractérisé en ce que ledit tiroir de commande de ladite valve différentielle (63, 61) coulisse dans un alésage dont une extrémité est reliée à une source de basse pression et l'autre au moteur de frein de ladite roue libre.

5. Système d'anti-patinage selon la revendication 4, caractérisé en ce qu'un ressort précontraint rappelle au repos ledit tiroir de commande à l'encontre de la pression dans le moteur de frein de ladite roue libre.

## Patentansprüche

1. Antischlupfsystem für die Antriebsräder und Bremssystem für ein Kraftfahrzeug, wobei das Bremssystem zwei hydraulische Bremskreise enthält, die jeweils den Bremszylinder eines Antriebsrades und den Bremszylinder eines freien Rades mit einer Arbeitskammer des Hauptzylinders (1) verbinden, der mit einem Hauptvorratsbehälter (20) von unter niedrigem Druck stehendem Fluid verbunden ist, und eine Antiblockiervorrichtung für die Räder beim Bremsen beinhaltet, die für jedes Rad enthält: ein Elektroventil (54, 53, 52, 51) mit drei Wegen, welches normalerweise eine Verbindung zwischen einem Eingang für unter Druck stehendes Fluid und dem dem Rad zugeordneten Bremszylinder (34, 33, 32, 31) öffnet, während es in Phasen der Druckminderung der Antiblockiervorrichtung diese Verbindung schließt und den Bremszylinder mit einem jeden Bremskreis eigenen Vorratsbehälter (21, 22) für unter niedrigem Druck stehendes Fluid verbindet, und für jeden Bremskreis wenigstens einen Schaltschieber (11, 12), der die Bremszylinder von der Arbeitskammer des Hauptzylinders trennt, wenn die der Antiblockiervorrichtung zugeordnete Pumpe (46, 45) des Bremskreises arbeitet, wobei die Pumpe (46, 45) bei der Antiblockierfunktion Fluid aus dem eigenen Vorratsbehälter ansaugt, dadurch gekennzeichnet, daß es außerdem für jeden Bremskreis ein Differenzventil (63, 61) enthält, das durch einen Steuerschieber gebildet und bezüglich des dem Bremszylinder (33, 31) des freien Rades dieses Bremskreises zugeordneten Elektroventils (53, 51) parallel angebracht ist, wobei das Differenzventil im Ruhezustand eine direkte Verbindung zwischen dem Bremszylinder (33, 31) des freien Rades und der Arbeitskammer des Hauptzylinders (1) bestimmt und diese Verbindung unterbricht, wenn der Fluiddruck im Bremszylinder (33, 31) des freien Rades größer als ein vorbestimmter Wert ist.

2. Antischlupfsystem nach Anspruch 1, dadurch gekennzeichnet, daß das Differenzventil zusätzlich eine Verbindung zwischen dem Förderausgang der Pumpe (46, 45) und der Arbeitskammer bestimmt, wenn der Fluiddruck im Bremszylinder (33, 31) des freien Rades größer als ein vorbestimmter Wert ist.

3. Antischlupfsystem nach Anspruch 2, dadurch gekennzeichnet, daß die Verbindung zwischen dem Förderausgang der Pumpe (46, 45) und der Arbeitskammer über eine Drosselstelle (70, 71) gebildet ist.

4. Antischlupfsystem nach einem der vorhergehenden Ansprüche, dadurch gekennzeichnet, daß der Steuerschieber des Differenzventils (63, 61) in einer Bohrung gleitet, deren eines Ende mit einer Quelle von unter Druck stehendem Fluid und deren anderes mit dem Bremszylinder des freien Rades verbunden ist.

5. Antischlupfsystem nach Anspruch 4, dadurch gekennzeichnet, daß im Ruhezustand eine vorgespannte Feder den Steuerschieber gegen den Druck im Bremszylinder des freien Rades zurückstellt.

## Claims

1. Driving-wheel anti-skid system and braking system for a motor vehicle, the braking system of which comprises two hydraulic sub-circuits each connecting the brake motor of a driving wheel and the brake motor of a free wheel to a working chamber of a master cylinder (1) connected to a general reservoir (20) of fluid under low pressure and includes a wheel braking anti-lock device comprising, for each of the wheels, a three-way solenoid valve (54, 53, 52, 51) normally opening communication between an inlet of fluid under pressure and the brake motor (34, 33, 32, 31) associated with the wheel, whilst, in the expansion phase of the anti-lock device, it closes this communication and connects the brake motor to a reservoir (21, 22) of fluid under low pressure specific to each sub-circuit, and, for each sub-circuit, at least one switching slide (11, 12) isolating the brake motors from the working chamber of the master cylinder during the functioning of the pump (46, 45), of said sub-circuit, associated with the anti-lock device, in the anti-lock mode said pump (46, 45) sucking the fluid from said specific reservoir, characterized in that it comprises, furthermore, for each sub-circuit, a differential valve (63, 61) formed by a control slide and mounted in parallel with the solenoid valve (53, 51) associated with the brake motor (33, 31) of the free wheel of this sub-circuit, this differential valve determining, at rest, a direction communication between the brake motor (33, 31) of said free wheel and the working chamber of said master cylinder (1) and interrupting this communication when the pressure of the fluid in the brake motor (33, 31) of said free wheel is higher than a particular value.

2. Anti-skid system according to Claim 1, characterized in that said differential valve determines, furthermore, communication between the delivery outlet of the pump (46, 45) and said working chamber when the pressure of the fluid in the brake motor (33, 31) of said free wheel is higher than a particular value.

3. Anti-skid system according to Claim 2, characterized in that communication between the delivery outlet of the pump (46, 45) and said working chamber is made by way of a restriction (70, 71).

4. Anti-skid system according to any of the preceding claims, characterized in that said control slide of said differential valve (63, 61) slides in a bore, of which one end is connected to a low-pressure source and the other to the brake motor of said free wheel.

5. Anti-skid system according to Claim 4, characterized in that a prestressed spring returns said control slide to rest counter to the pressure in the brake motor of said free wheel.
